# EUROPÄISCHE PATENTSCHRIFT

(11) **EP 3 084 250 B1**
(45) Veröffentlichungstag und Bekanntmachung des Hinweises auf die Patenterteilung: **08.02.2023**
(21) Anmeldenummer: 14827735.3
(22) Anmeldetag: 17.12.2014
(51) Int. Cl.: F16D 23/06, B22F 3/24

(54) **PULVERMETALLURGISCH HERGESTELLTE KOMPONENTE**
COMPONENT PRODUCED BY POWDER METALLURGY
COMPOSANT PRODUIT PAR LA MÉTALLURGIE DES POUDRES

(30) Priorität: 18.12.2013 EP 13382523
(43) Veröffentlichungstag der Anmeldung: 26.10.2016
(73) Patentinhaber: PMG Asturias Powder Metal S.A.U., 33682 Mieres (ES)
(72) Erfinder: CASTRO MENENDEZ-CASTANEDO, Diego, E-33202 Gijon - Asturias (ES); LOPEZ MARTINEZ, Juan Ignacio, E-33011 Oviedo - Asturias (ES); PRESA LOPEZ, Yvan, E-33012 Oviedo - Asturias (ES)
(86) Internationale Anmeldenummer: PCT/EP2014/003412
(87) Internationale Veröffentlichungsnummer: WO 2015/090592

(56) Entgegenhaltungen:
- WO-A1-02/31374
- WO-A1-2013/136983
- AT-A1- 510 204
- DE-A1- 10 122 184
- DE-T2- 60 036 608

## Beschreibung

Die Erfindung betrifft eine pulvermetallurgisch hergestellte Komponente mit einem Körper und einer daran angeordneten Verzahnung mit einer Vielzahl von Zähnen.

Derartige Komponenten, wie beispielsweise Schaltmuffen - oft auch als Schiebemuffen bezeichnet - sind beispielsweise aus DE 102 47 330 A1 und AT 510 204 A1 bekannt. Sie werden zum Gangwechsel in handgeschalteten Getrieben, insbesondere in Kfz-Schaltgetrieben verwendet. Während des Schaltvorganges greifen die Innenverzahnung der Schaltmuffe und eine Gegenverzahnung eines Kupplungselementes (z.B. Synchronring oder Kupplungskörper) der Synchronisiereinrichtung axial ineinander ein. Dabei soll die geometrische Formgebung der Zähne der Innenverzahnung derart beschaffen sein, dass das axiale Ineinandergreifen erleichtert wird.

Die verhältnismäßig komplexe Geometrie der Verzahnung solcher Komponenten kann vorteilhaft mittels während einer pulvermetallurgischen Herstellung (Pressen des Pulvers, Wärmebehandeln, insbesondere Sintern) erzielt werden, da hierbei das Profil und die Soll-Maße der Geometrie mittels Pressen und/oder Kalibrieren und/oder Formen hergestellt werden. Im Gegensatz hierzu ist bei der Herstellung von solchen Komponenten aus geschmiedetem Vollmaterial oder aus Metallblech oftmals eine aufwändige spanende Nachbearbeitung erforderlich.

Ein wesentlicher Aspekt bei der Herstellung von Verzahnungskomponenten ist deren Festigkeit gegen Ermüdung und Bruch insbesondere im Bereich der Verzahnung. DE 102 47 330 A1 schlägt deshalb einen zweiten Pressvorgang nach dem Sintern vor, um ein selektives Nachverdichten der Zahnflanken der Innenverzahnung einer Schaltmuffe zu erreichen. Gemäß AT 510 204 A1 weisen die Zähne der Innenverzahnung zumindest im distalen Endbereich eine Dichte von zumindest 7,3 g/cm³ auf, um eine höhere Lebensdauer der Schaltmuffe im Betrieb zu erreichen.

In DE 600 36 608 T2 wird vorgeschlagen, eine Pulvermetall-Komponente mit einer Außenverzahnung nach dem Sintern zu verdichten. Dabei wird der Außenumfang eines Zahnrades verdichtet, um die Zahnradzähne zu härten. WO 2013/136983 A1 offenbart ein gesintertes Zahnrad mit einer Außenverzahnung. In einem Zahnfußbereich ist ein Abschnitt mit hoher Verdichtung angeordnet, dessen Porosität geringer ist als in einem zentralen Bereich des Zahnrades.

Der Erfindung liegt die Aufgabe zugrunde, die mechanischen Eigenschaften einer pulvermetallurgischen Komponente mit Verzahnung zu verbessern.

Diese Aufgabe wird durch die Merkmalskombination des Patentanspruches 1 gelöst. Vorteilhafte Ausführungen der Komponente sind den Unteransprüchen entnehmbar.

Gemäß Anspruch 1 weist die pulvermetallurgisch hergestellte Komponente einen Körper und eine Verzahnung mit einer Vielzahl von in Umfangsrichtung aneinandergereihten Zähnen auf. Zwischen zwei in Umfangsrichtung einander zugewandten Zahnflanken zweier benachbarter Zähne ist eine Zahnlücke mit einem Lückenboden ausgebildet. Dieser Lückenboden ist geometrisch derart gestaltet, dass er die beiden einander zugewandten Zahnflanken der beiden benachbarten Zähne miteinander verbindet. Der Lückenboden befindet sich also im Bereich eines Zahnfußkreises der Verzahnung bzw. im Bereich des Umfangs (Innenumfang oder Außenumfang) des Körpers. Eine an einer Zahnflanke angeordnete Funktionsausnehmung und ein in Umfangsrichtung benachbart angeordneter äußerer Bodenabschnitt des Lückenbodens sind zumindest teilweise Bestandteil eines Verdichtungsbereiches der Komponente, wobei dieser Verdichtungsbereich eine lokale Verdichtung der Komponente bildet und eine höhere Dichte aufweist im Vergleich zu der mittleren Dichte der gesamten Komponente.

Der Verdichtungsbereich repräsentiert also entlang der Umfangsrichtung der Komponente einen Bereich bzw. einen Randabschnitt mit größerer Oberflächendichte im Vergleich zur Dichte der gesamten Komponente.

Gleichzeitig handelt es sich bei dem Verdichtungsbereich um einen Bereich mit größerer Oberflächendichte im Vergleich zur Oberflächendichte von in Umfangsrichtung benachbart angeordneten Bereichen. Dabei sind die Funktionsausnehmung und der äußere Bodenabschnitt des Lückenbodens zumindest teilweise Bestandteil des Verdichtungsbereiches derart, dass der Verdichtungsbereich eine höhere Dichte aufweist im Vergleich zur Dichte eines in Umfangsrichtung benachbarten Bodenabschnittes desselben Lückenbodens. Dieser benachbarte Bodenabschnitt ist kein Bestandteil des Verdichtungsbereiches.

Mit anderen Worten bildet der Verdichtungsbereich eine lokal verdichtete Randschicht, deren Dichte einerseits größer ist als die Dichte der gesamten Komponente und andererseits größer ist als die Dichte in den Randschichten anderer Bereiche bzw. Abschnitte entlang der Umfangsrichtung.

Insbesondere nimmt die lokal höhere Dichte des Verdichtungsbereiches ausgehend von der Materialoberfläche mit zunehmender Materialtiefe in Radialrichtung ab, bis etwa die mittlere Dichte der gesamten Komponente erreicht ist.

Die entlang der Umfangrichtung abschnittsweise unterschiedliche Dichte des Lückenbodens hat den Vorteil, dass nur ein einziger oder mehrere Abschnitte des Lückenbodens verdichtet werden müssen, um die mechanischen Eigenschaften der Verzahnung zu verbessern. Somit kann die Konstruktion eines geeigneten Verdichtungswerkzeuges auf diejenigen Abschnitte des Lückenbodens beschränkt werden, die im verdichteten Zustand für eine Unterstützung der Festigkeit der Verzahnung besonders effizient sind. Dies vereinfacht die Konstruktion des Verdichtungswerkzeuges. Außerdem lässt sich ein lediglich lokal bzw. abschnittsweise verdichteter Lückenboden zwischen zwei benachbarten Zähnen mit verhältnismäßig geringem Energie-/Kraftaufwand des Verdichtungswerkzeuges erzielen.

Alternativ kann auch der gesamte Lückenboden zwischen zwei benachbarten Zähnen entlang der Umfangsrichtung verdichtet werden, wobei dann einzelne Abschnitte entlang der Umfangsrichtung mittels eines geeigneten Verdichtungswerkzeuges unterschiedlich stark verdichtet sind.

Somit unterstützt ein den Zähnen benachbarter Bereich der Komponente, nämlich zumindest ein Abschnitt bzw. Bodenabschnitt des Lückenbodens, durch seine lokal höhere Dichte eine größere Festigkeit und somit eine längere Lebensdauer der Komponente im Betrieb. Insbesondere ist die Festigkeit der Zähne gegen angreifende Drehmomente während des Betriebes der Komponente erhöht. Abhängig von dem Betrag der lokal höheren Dichte (und somit der höheren Festigkeit gegen angreifende Drehmomente) kann vorteilhaft die Geometrie der gesamten Komponente in Radialrichtung kleiner dimensioniert werden, so dass die Komponente volumensparend auch bei beengten Raumverhältnissen eingesetzt werden kann.

Vorzugsweise weisen mehrere, insbesondere sämtliche, Lückenboden der Verzahnung einen Verdichtungsbereich auf.

Der lokale Verdichtungsbereich trägt vorteilhaft dazu bei, dass die poröse Komponente als Sinter-Bauteil (geringe Eigenmasse, geringer Materialverbrauch) im Vergleich zu einem Bauteil aus Vollmaterial (z.B. geschmiedet) kostengünstiger hergestellt werden kann und gleichzeitig im mechanisch belasteten Bereich der Verzahnung - insbesondere im Übergangsbereich zwischen Lückenboden und Zahnflanken - mechanische Eigenschaften aufweist, die denen einer Komponente aus Vollmaterial ähnlich oder vergleichbar sind. Vorteilhaft ist die metallische Komponente aus Sintereisen oder Sinterstahl hergestellt.

Die höhere Dichte des Verdichtungsbereiches wird insbesondere durch lokales Verdichten nach dem Wärmebehandeln bzw. Sintern realisiert. Beispielsweise erfolgt dieses lokale Nachverdichten mittels eines axialen oder radialen Nachpressens nach dem Sintern der Komponente. Alternativ zu diesem Nachpressen oder zusätzlich kann die gewünschte lokal höhere Oberflächendichte im Bereich der Verzahnung erzielt werden während eines Vorganges zur lokalen Veränderung der Geometrie bzw. des Oberflächenprofils der Komponente (z.B. in Radialrichtung der Komponente wirksame Formungswerkzeuge zum radialen Formen eines Profils an der Verzahnung), während eines Rolliervorganges oder während eines Kalibriervorganges (z.B. Pressen oder Rollieren). Hierzu werden insbesondere serienmäßig ohnehin benutzte Werkzeuge verwendet, wodurch die Herstellung des lokalen Verdichtungsbereiches besonders kostengünstig ist. Beispielsweise kann die lokal höhere Dichte des Verdichtungsbereiches prozesstechnisch einfach und automatisch, d.h. ohne zusätzliche Prozessschritte, während eines radialen Formungsvorganges nach der Wärmebehandlung bzw. Sintern erzielt werden, bei dem ein Profil einzelner Zähne mittels radialer Formungskräfte hergestellt wird.

Der Lückenboden ist entlang der Umfangsrichtung betrachtet derjenige Abschnitt des Innen- oder Außenumfangs der Komponente, der zwischen den einander zugewandten Zahnflanken zweier benachbarter Zähne angeordnet ist. Dabei ist er insbesondere außerhalb von Funktionsausnehmungen (z.B. Hinterlegungen, Ausnehmungen) der Zahnflanken angeordnet. Diese Funktionsausnehmungen bilden spezifische Abschnitte innerhalb der Zahnflanken und können insbesondere die Funktion haben, die Gegenverzahnung einer Gegen-Komponente (z.B. eines Kupplungselementes) zur Kraftübertragung in Umfangsrichtung bzw. Drehrichtung zu kontaktieren.

Die Verzahnung der Komponente ist insbesondere eine Geradverzahnung mit parallel zur Axialrichtung verlaufenden Zahnflanken. Vorzugsweise sind an einzelnen oder sämtlichen Zahnflanken Funktionsausnehmungen, insbesondere Hinterlegungen, vorhanden. Diese Funktionsausnehmungen können z.B. an der wärmebehandelten bzw. gesinterten Komponente durch Rollieren, radiales Formen oder ein sonstiges plastisches Umformen an der Zahnflanke mechanisch geformt werden. Die Funktionsausnehmung ist insbesondere eine Flächenausnehmung (z.B. als Hinterlegungs-Fläche) an der Zahnflanke und verläuft vorzugsweise entweder geneigt zur Axialrichtung oder parallel zur Axialrichtung.

Vorzugsweise beträgt die höhere Materialdichte des Verdichtungsbereiches mindestens 7,3 g/cm³, insbesondere mindestens 7,4 g/cm³, weiterhin insbesondere mindestens 7,5 g/cm³. Die mittlere Materialdichte der gesamten Komponente beträgt vorzugsweise 7,0 g/cm³ oder niedriger. Vorzugsweise entspricht die Materialdichte von Oberflächenbereichen oder Abschnitten, welche in Umfangsrichtung außerhalb des Verdichtungsbereiches angeordnet sind, etwa der mittleren Materialdichte der gesamten Komponente.

Die gewünschten Dichte-Verhältnisse werden vorzugsweise erzielt, indem die Komponente nach dem Wärmebehandeln bzw. Sintern nur in definierten Abschnitten bzw. Oberflächenbereichen entlang der Verzahnung, d.h. entlang der Umfangsrichtung des die Verzahnung tragenden Körpers, verdichtet wird. Der Verdichtungsbereich entsteht deshalb vorzugsweise durch lokale Verdichtung bzw. lokale Nachverdichtung.

Die höhere Dichte bzw. höhere mittlere Materialdichte des Verdichtungsbereiches bedeutet mit anderen Worten, dass der Verdichtungsbereich eine geringere mittlere Porosität hat als die gesamte Komponente und auch eine geringere mittlere Porosität hat im Vergleich zu benachbarten Abschnitten bzw. Oberflächenbereichen entlang des Umfangs der Komponente

Die Materialdichten werden vorzugsweise in bekannter Weise indirekt über die Porosität ermittelt. Die Porosität wiederum wird vorzugsweise mittels der Auftriebsmethode nach Archimedes oder mittels quantitativer Bildanalyse ermittelt. Bei Ermittlung der Werte mittels quantitativer Bildanalyse erfolgt vorzugsweise ein messtechnischer Abgleich mittels der vorgenannten Auftriebsmethode. Bei der quantitativen Bildanalyse (Summe der Porenflächen im Verhältnis zur betrachteten Gesamtfläche) werden in bekannter Weise Messungen an Oberflächen eines Querschliffes der Komponente durchgeführt, wobei der zu untersuchende Bereich der porösen Komponente in ein Rasterfeld eingeteilt wird.

Vorzugsweise erstreckt sich der Verdichtungsbereich mit einer lokal höheren Dichte ausgehend von der Lückenboden-Oberfläche bzw. von der Oberfläche des Umfangs des Körpers der Komponente in Radialrichtung derart, dass ausgehend von der Oberfläche mit zunehmender Materialtiefe zunächst noch eine höhere Materialdichte ermittelbar ist im Vergleich zur mittleren Dichte der gesamten Komponente, Der absolute Wert der lokal höheren Materialdichte nimmt dabei üblicherweise in Radialrichtung mit zunehmender Materialtiefe ab, bis er in einer bestimmten Materialtiefe ähnlich oder identisch mit der mittleren Dichte der gesamten Komponente ist. Auf diese Weise sind zumindest die oberflächennahen Bereiche eines Lückenboden-Abschnittes Bestandteil des Verdichtungsbereiches.

Um die Festigkeit der Verzahnung zu verbessern, ist der in Umfangsrichtung äußere Bodenabschnitt des Lückenbodens zumindest teilweise Bestandteil des Verdichtungsbereiches und weist eine lokal höhere Dichte auf im Vergleich zu anderen Abschnitten bzw. Bereichen in Umfangsrichtung und im Vergleich zu der Dichte der gesamten Komponente. Dabei ist der äußere Bodenabschnitt des Lückenbodens ein Abschnitt, welcher in Umfangsrichtung einer Zahnflanke eines Zahnes zugewandt oder benachbart ist und sich insbesondere unmittelbar an die Zahnflanke anschließt.

Die Festigkeit der Verzahnung gegen Ermüdung wird dadurch unterstützt, indem sich der Verdichtungsbereich mit lokal höherer Dichte auch auf den Bereich einzelner oder sämtlicher Funktionsausnehmungen (insbesondere Hinterlegungen) an den Zahnflanken der Zähne erstreckt. Hierbei ist die Funktionsausnehmung zumindest teilweise derart verdichtet, dass zumindest ein Abschnitt dieser Funktionsausnehmung Bestandteil des Verdichtungsbereiches ist. Da der äußere Bodenabschnitt relativ zu einer Zahnflanke und folglich auch relativ zu einer Funktionsausnehmung benachbart angeordnet ist, lässt sich die gewünschte Verdichtung im Bereich des Überganges zwischen einem Zahn und einem Lückenboden fertigungstechnisch einfach in einem einzigen Arbeitsschritt herstellen.

Vorzugsweise weist der Lückenboden entlang der Umfangsrichtung betrachtet zwei äußere Bodenabschnitte und einen inneren Bodenabschnitt zwischen den beiden äußeren Bodenabschnitten auf. Da ein äußerer Bodenabschnitt in Umfangsrichtung der Zahnflanke eines Zahnes benachbart angeordnet ist, ist eine höhere Verdichtung dieses äußeren Bodenabschnittes für die gewünschte Festigkeit der Verzahnung besonders effizient. Hingegen kann der innere Bodenabschnitt frei von einer höheren Dichte sein. Auf diese Weise muss in Umfangsrichtung betrachtet nicht der gesamte Lückenboden verdichtet werden, wodurch zur Herstellung dieser Verdichtung das bereitzustellende Werkzeug konstruktiv einfach bleiben kann und verhältnismäßig geringe Druckkräfte des Werkzeugs ausreichend sind.

Abgesehen von ihrer Position in Umfangsrichtung relativ zu einer Zahnflanke eines Zahnes können ein äußerer Bodenabschnitt und der innere Bodenabschnitt beispielsweise auch durch einen unterschiedlichen geometrischen Querschnittsverlauf voneinander unterschieden werden. Vorzugsweise haben der äußere Bodenabschnitt und der innere Bodenabschnitt einen unterschiedlichen Krümmungsverlauf. Dabei kann der innere Bodenabschnitt selbst und/oder der äußere Bodenabschnitt selbst ebenfalls in mehrere Abschnitte unterteilt sein, z.B. in mehrere unterschiedliche Krümmungsabschnitte.

In einer bevorzugten Ausführungsform weist der in einer radialen Querschnittsebene verlaufende Querschnitt des Lückenbodens zumindest im Bereich eines äußeren Bodenabschnittes eine Bogenform auf. Hierdurch wird ein für die Festigkeit der Verzahnung vorteilhafter geometrischer Übergang zwischen dem Lückenboden und den sich anschließenden Zahnflanken geschaffen. Ein äußerer Bodenabschnitt kann auch mehrere, insbesondere zwei, in Umfangsrichtung aneinandergereihte unterschiedliche Bogenformen aufweisen.

Insbesondere weist die Bogenform des äußeren Bodenabschnittes einen Kreisbogen auf oder besteht aus einem Kreisbogen. Der Radius des Kreisbogens hat vorzugsweise einen Wert aus einem Bereich mit einer unteren Grenze von 0,1 mm und einer oberen Grenze von 4 mm, insbesondere 2 mm. In einer bevorzugten Ausführungsform weist der äußere Bodenabschnitt in Umfangsrichtung zwei aneinandergereihte Kreisbögen mit unterschiedlichem Radius auf. Beispielsweise hat der Radius des ersten Kreisbogens einen Wert aus einem Bereich mit einer unteren Grenze von 0,1 mm und einer oberen Grenze von 2 mm, während der Radius des zweiten Kreisbogens einen Wert aus einem Bereich mit einer unteren Grenze von 0,1 mm und einer oberen Grenze von 4 mm hat.

Der innere Bodenabschnitt kann abhängig von der gewünschten Geometrie einen geraden Querschnitt oder eine konvexe oder konkave Querschnittsform aufweisen. Vorzugsweise weist der innere Bodenabschnitt des Lückenbodens eine Bogenform auf. Insbesondere weist diese Bogenform einen Kreisbogen auf oder besteht aus einem Kreisbogen. Beispielsweise ist der innere Bodenabschnitt als ein Kreisbogen ausgebildet, der zwei äußere Bodenabschnitte desselben Lückenbodens miteinander verbindet. Alternativ weist der innere Bodenabschnitt zwei Kreisbögen sowie dazwischen ein Zylindersegment eines Fußkreises des Komponenten-Körpers auf. Diese letztgenannte Alternative lässt sich vorteilhaft dann realisieren, wenn der Lückenboden zwischen zwei Zähnen in Umfangsrichtung groß genug ist. In einer weiteren Alternative besteht der innere Bodenabschnitt nur aus dem Zylindersegment des Fußkreises. Abhängig von der radialen Dimensionierung der Komponente kann eine unterschiedliche Ausgestaltung des inneren Bodenabschnittes gewählt werden, um die mechanische Festigkeit der Verzahnung zu unterstützen und den Verdichtungsbereich mittels einer entsprechenden Werkzeuggeometrie effizient herzustellen.

Der Kreisbogen des inneren Bodenabschnittes hat einen Radius, der vorzugsweise aus einem Bereich mit der Untergrenze = 0,1 mm und der Obergrenze = 15 mm ausgewählt ist. Der Radius des vorgenannten Fußkreises ist vorzugsweise aus einem Bereich mit der Obergrenze = 75 mm ausgewählt.

In einer weiteren bevorzugten Ausführungsform ist ein äußerer Bodenabschnitt (insbesondere sämtliche äußeren Bodenabschnitte) nach Art einer Ausnehmung des Lückenbodens ausgebildet. Dies bedeutet, dass der äußere Bodenabschnitt zumindest teilweise radial weiter außen angeordnet ist als ein innerer Bodenabschnitt. Diese Geometrie erleichtert eine sichere Positionierung eines geeigneten Werkzeugs an der Komponente zur Herstellung der lokal höheren Dichte im Verdichtungsbereich.

Um die Festigkeit der Zähne weiter zu erhöhen, ist es vorteilhaft, dass der äußere Bodenabschnitt tangential zu der ihm zugeordneten Zahnflanke des Zahnes verläuft. Diese Geometrie kann etwaige Ausbrüche des Materials bei der Herstellung der Verzahnung (insbesondere beim lokalen Verdichten oder beim Entformen) reduzieren oder vermeiden. Außerdem erleichtert diese Geometrie eine gleichmäßige lokale Verdichtung des gesamten Verdichtungsbereiches (z.B. ein Abschnitt des Lückenbodens und ein Abschnitt der sich anschließenden Zahnflanke) in einem einzigen Verfahrensschritt. Hierzu kann ein geeignetes Werkzeug mit der lokalen Verdichtungsfunktion geometrisch einfach ausgestaltet bleiben.

Diese gleichmäßige lokale Verdichtung des gesamten Verdichtungsbereiches in einem einzigen Verfahrensschritt ist insbesondere dann möglich, wenn der äußere Bodenabschnitt alternativ oder zusätzlich tangential zu einer Funktionsausnehmung (insbesondere Hinterlegung) an der Zahnflanke des Zahnes angeordnet ist. Somit kann auch ein die Funktionsausnehmung zumindest teilweise enthaltender Verdichtungsbereich mit verhältnismäßig geringen Druckkräften zeitsparend und effizient hergestellt werden.

In einer weiteren bevorzugten Ausführungsform ist der äußere Bodenabschnitt tangential zu einem Kreisumfang angeordnet, der konzentrisch zu einer Mittellängsachse der Komponente verläuft. Diese Ausgestaltung unterstützt eine verfahrenstechnisch einfache Herstellung des Verdichtungsbereiches. Dieser Kreisumfang hat vorzugsweise einen größeren Radius als ein Fußkreis am Innenumfang des Körpers (im Falle einer Innenverzahnung) und vorzugsweise einen kleineren Radius als ein Fußkreis am Außenumfang des Körpers (im Falle einer Außenverzahnung).

Der zwischen zwei benachbarten Zähnen angeordnete Lückenboden ist in Umfangsrichtung insbesondere spiegelsymmetrisch ausgebildet bezüglich einer in Radialrichtung angeordneten Symmetrieachse. Hierdurch ist eine gleichmäßige und somit mechanische Spannungen reduzierende Verteilung der an der Verzahnung angreifenden Kräfte und Drehmomente möglich.

Eine prozesstechnisch einfache Ausgestaltung des Lückenbodens wird dadurch unterstützt, dass insbesondere die zwei äußeren Bodenabschnitte des Lückenbodens spiegelsymmetrisch zueinander angeordnet sind.

Vorzugsweise weist der äußere Bodenabschnitt entlang der Axialrichtung unterschiedliche geometrische Querschnittsformen bezüglich einer radialen Querschnittsebene auf. Hierdurch kann der Übergang von dem Lückenboden zu einem benachbarten Zahn abhängig von dem axialen Verlauf der Zahnflanke (insbesondere unter Berücksichtigung von Funktionsflächen, insbesondere Hinterlegungs-Flächen, an der Zahnflanke) derart ausgestaltet werden, dass ein Presswerkzeug oder dergleichen mit relativ geringen Presskräften in einem einzigen Pressvorgang die erforderliche Dichte entlang der gesamten axialen Erstreckung des Verdichtungsbereiches erzielt.

Insbesondere weist der äußere Bodenabschnitt entlang der Axialrichtung mindestens zwei unterschiedliche radiale Querschnittsverläufe auf. Dabei befindet sich eine radiale Querschnittsebene im Bereich einer Funktionsausnehmung (insbesondere Hinterlegung) an der Zahnflanke, während sich eine weitere radiale Querschnittsebene im Bereich der Zahnflanke axial außerhalb der vorgenannten Funktionsausnehmung befindet.

Vorzugsweise ist der innere Bodenabschnitt des Lückenbodens bereichsweise oder vollständig auf einem Fußkreis des Körpers bzw. der Komponente angeordnet, wobei dieser Fußkreis üblicherweise konzentrisch zu einer Mittellängsachse der Komponente angeordnet ist. Eine derartige Geometrie des Lückenbodens unterstützt die Festigkeit der Verzahnung sowie eine prozesstechnisch einfache und kostengünstige Herstellung der Komponente. Wie bereits erläutert, ist der innere Bodenabschnitt hierbei vorzugsweise als ein Kreisbogen ausgestaltet. Der Radius des Fußkreises ist vorzugsweise aus einem Bereich mit der Obergrenze = 75 mm ausgewählt.

Die pulvermetallurgische Herstellung der Komponente umfasst üblicherweise zumindest das Pressen und Wärmebehandeln (insbesondere Sintern) einer Pulvermetall-Vorform. Nach dem Wärmebehandeln bzw. Sintern kann die Komponente noch in der gewünschten Weise verdichtet werden. Die hier offenbarte lokal unterschiedliche Verdichtung an der Verzahnung und die verschiedenen geometrischen Merkmale der Verzahnung lassen sich auf Innenverzahnungen unterschiedlicher Komponenten oder entsprechend abgewandelt auf Außenverzahnungen unterschiedlicher Komponenten anwenden. Auch ist die Anwendung dieser Merkmale auf eine Innen- und Außenverzahnung einer Komponente möglich, sofern die Komponente beide Verzahnungsarten aufweist. So kann eine Komponente mit Außenverzahnung beispielsweise als Zahnrad (z.B. gemäß DE 600 36 608 T2, WO 2013/091609 A1), Synchronring (z.B. gemäß DE WO 2012/163324 A1) oder Kupplungsring (z.B. gemäß DE WO 2011/041811 A1) ausgebildet sein, mit Innenverzahnung beispielsweise als Schaltmuffe (z.B. gemäß DE 102 47 330 A1) ausgebildet sein oder mit Außen- und Innenverzahnung beispielsweise als Synchronnabe (z.B. gemäß EP 2 245 325 B1) ausgebildet sein.

Die Komponente hat üblicherweise einen zentralen Körper und daran angeordnet eine Verzahnung. Im Falle einer Innenverzahnung befindet sich diese an einem Innenumfang des Körpers. Im Falle einer Außenverzahnung befindet sich diese an einem Außenumfang des Körpers. Die Komponente bzw. ihr Körper ist üblicherweise im Querschnitt gebogen, insbesondere kreisartig oder ringartig, ausgebildet. Vorzugsweise weist die Komponente eine Mittellängsachse auf. Diese Mittellängsachse entspricht im Betrieb der Komponente vorzugsweise ihrer Dreh- oder Rotationsachse.

In einer bevorzugten Ausführungsform ist die Komponente als eine Schaltmuffe mit einer Innenverzahnung ausgebildet.

Die Erfindung wird anhand der in den Zeichnungen dargestellten Ausführungsbeispiele näher erläutert. Es zeigen:
- Fig. 1: eine perspektivische Darstellung einer Komponente in Form einer Schaltmuffe,
- Fig. 2: eine Draufsicht eines Teiles der Schaltmuffe gemäß Fig. 1,
- Fig. 3: eine vergrößerte Ansicht zweier benachbarter Zähne entsprechend Blickrichtung III in Fig. 2,
- Fig. 4: eine weitere Ausführungsform benachbarter Zähne in der Ansicht gemäß Fig. 3,
- Fig. 5: eine vergrößerte Darstellung des Details V in Fig. 2 mit einer ersten Ausführungsform des Lückenbodens,
- Fig. 6: eine weitere Ausführungsform des Lückenbodens in einer Schnittansicht,
- Fig. 7: eine weitere Ausführungsform des Lückenbodens in der Schnittansicht gemäß Fig. 6,
- Fig. 8: einen Querschnitt der Verzahnung entsprechend der Schnittlinie VIII-VIII in Fig. 3,
- Fig. 9: einen Querschnitt der Verzahnung entsprechend der Schnittlinie IX-IX in Fig. 3,
- Fig. 10: einen Querschnitt der Verzahnung entsprechend der Schnittlinie X-X in Fig. 4,
- Fig. 11: einen Querschnitt der Verzahnung entsprechend der Schnittlinie XI-XI in Fig. 4,
- Fig. 12: eine Aufnahme eines Festkörperschliffes einer Schaltmuffe als Komponente im Bereich einer Zahnlücke nach dem Sintern und mit lokaler Verdichtung,
- Fig. 13: eine weitere Aufnahme eines Festkörperschliffes einer Schaltmuffe als Komponente im Bereich einer Zahnlücke nach dem Sintern und mit lokaler Verdichtung.

Die pulvermetallurgische Komponente 1 mit einer Verzahnung ist vorzugsweise als eine ringförmige Schaltmuffe ausgebildet. Dabei sei erwähnt, dass einzelne oder sämtliche der anhand der Schaltmuffe erläuterten Merkmale je nach Eignung auch bei anderen Typen von pulvermetallurgischen Komponenten (z.B. Kupplungsringe, Zahnräder, Synchronringe, Synchronnaben) mit einer Innenverzahnung und/oder einer Außenverzahnung angewendet werden können. So können insbesondere einzelne Merkmale der Geometrie und/oder der lokalen Verdichtung an der Verzahnung 3 der Schaltmuffe, z.B. des Lückenbodens 13, 20, 21 oder des Verdichtungsbereiches 27, auch bei der Innenverzahnung und/oder Außenverzahnung einer anderen Komponente (z.B. Zahnrad, Kupplungsring, Synchronring, Synchronnabe) realisiert sein.

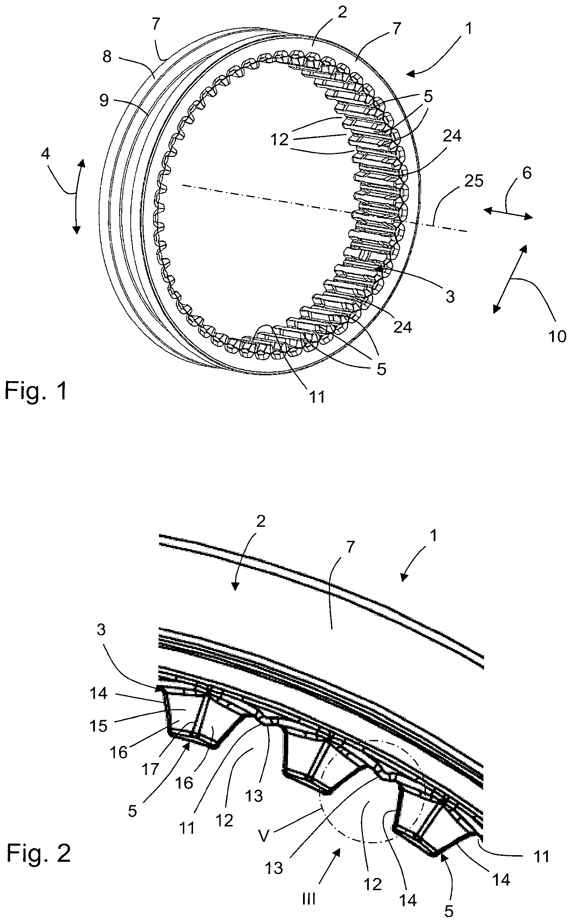

Die Komponente 1 in Fig. 1 weist einen zentralen Körper 2 und eine Verzahnung 3 mit einer Vielzahl von in Umfangsrichtung 4 aneinandergereihten Zähnen 5 auf. In Fig. 1 handelt es sich bei der Verzahnung 3 um eine Innenverzahnung. Die Zähne 5 erstrecken sich in Axialrichtung 6 zwischen beiden axialen Stirnseiten 7 der Komponente 1. in bevorzugten Ausführungsformen können sich die Zähne 5 entlang der Axialrichtung 6 auch über eine Stirnseite 7 oder beide Stirnseiten 7 hinaus erstrecken. Eine am Außenumfang 8 des Körpers 2 umlaufende Ringnut 9 dient in bekannter Weise dem Eingriff einer Schaltgabel oder dergleichen.

In der hier dargestellten Ausführungsform sind die Zähne 5 bezüglich einer in Radialrichtung 10 einliegenden Symmetrieebene spiegelsymmetrisch ausgebildet. In weiteren, hier nicht dargestellten Ausführungsformen können die Zähne 5 bezüglich der vorgenannten Symmetrieebene auch unsymmetrisch ausgestaltet sein.

In Fig. 2 ist die Komponente 1 ausschnittweise mit axialem Blick auf eine Stirnseite 7 des Körpers 2 dargestellt. Am Innenumfang 11 des Körpers 2 sind drei Zähne 5 erkennbar, die in Umfangsrichtung 4 mit Abstand zueinander angeordnet sind. Der Abstand zwischen zwei benachbarten Zähnen 5 bildet eine Zahnlücke 12 mit einem Lückenboden 13 am Innenumfang 11. Der Lückenboden 13 verbindet die beiden in Umfangsrichtung 4 einander zugewandten Zahnflanken 14 zweier benachbarter Zähne 5 miteinander. Das in Fig. 2 erkennbare axiale Freiende eines Zahnes 5 bildet einen Zahnkopf 15 mit zwei Dachschrägen 16 und einem Dachfirst als Zahnspitze 17, welche beide Dachschrägen 16 miteinander verbindet.

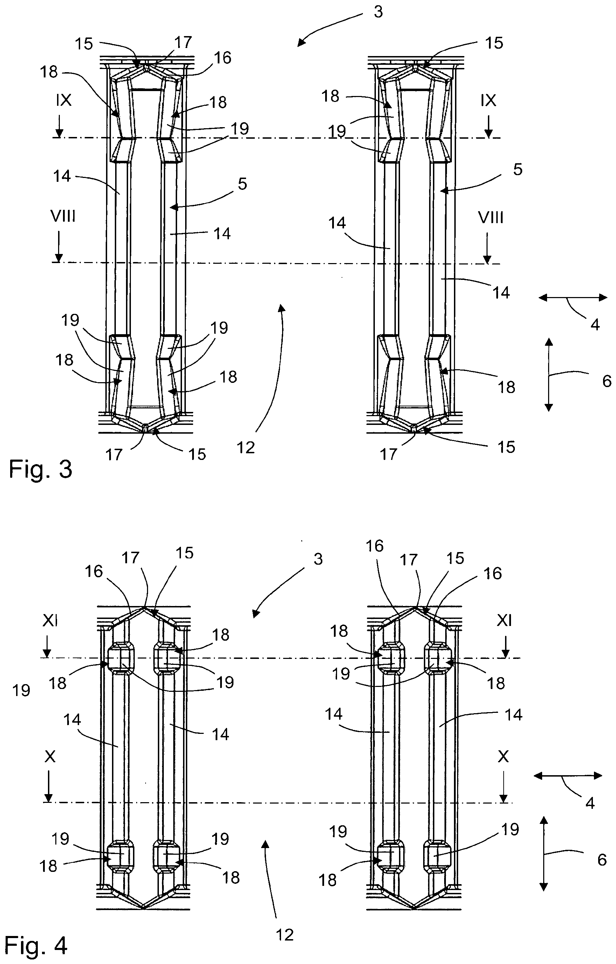

Die Zahnflanken 14 verlaufen grundsätzlich in Axialrichtung 6. Einzelne oder sämtliche Zähne 5 weisen jedoch Funktionsausnehmungen in Form von Hinterlegungen 18 auf. Diese Hinterlegungen 18 bilden Ausnehmungen an den Zahnflanken 14 und sind deshalb mit ihren Hinterlegungs-Flächen 19 als Funktions-Flächen außerhalb der übrigen Flächenebene der Zahnflanke 14 angeordnet. In Fig. 3 und Fig. 4 sind verschiedene Ausführungsformen der Hinterlegung 18 dargestellt. Beispielsweise weist die Hinterlegung 18 zwei Hinterlegungs-Flächen 19 auf, welche zueinander abgewinkelt und auch relativ zur Axialrichtung 6 abgewinkelt angeordnet sind (Fig. 3). In einer weiteren Ausführungsform ist die Hinterlegungs-Fläche 19 absatzartig zurückgesetzt und parallel zur Axialrichtung 6 angeordnet (Fig. 4).

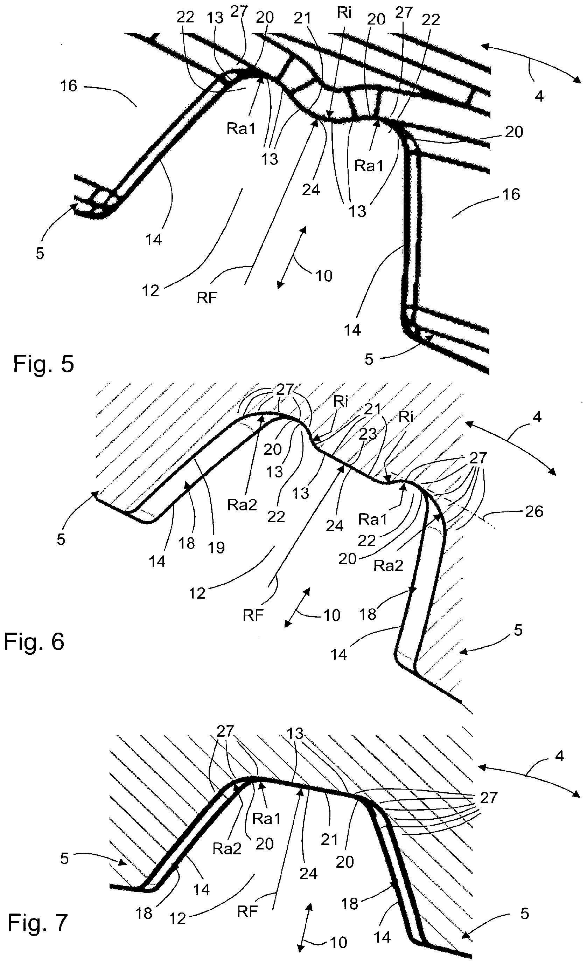

Entlang der Umfangsrichtung 4 weist der Lückenboden 13 zwei äußere Bodenabschnitte 20 und einen inneren Bodenabschnitt 21 auf. Die beiden äußeren Bodenabschnitte 20 sind jeweils einer Zahnflanke 14 zugewandt angeordnet, während der innere Bodenabschnitt 21 zwischen den beiden äußeren Bodenabschnitten 20 angeordnet ist. Diese prinzipielle Einteilung des Lückenbodens 13 kann in einer radialen Querschnittsebene betrachtet geometrisch unterschiedlich realisiert sein. In Fig. 5, Fig. 6 und Fig. 7 sind drei unterschiedliche Ausführungsformen des Lückenbodens 13 dargestellt.

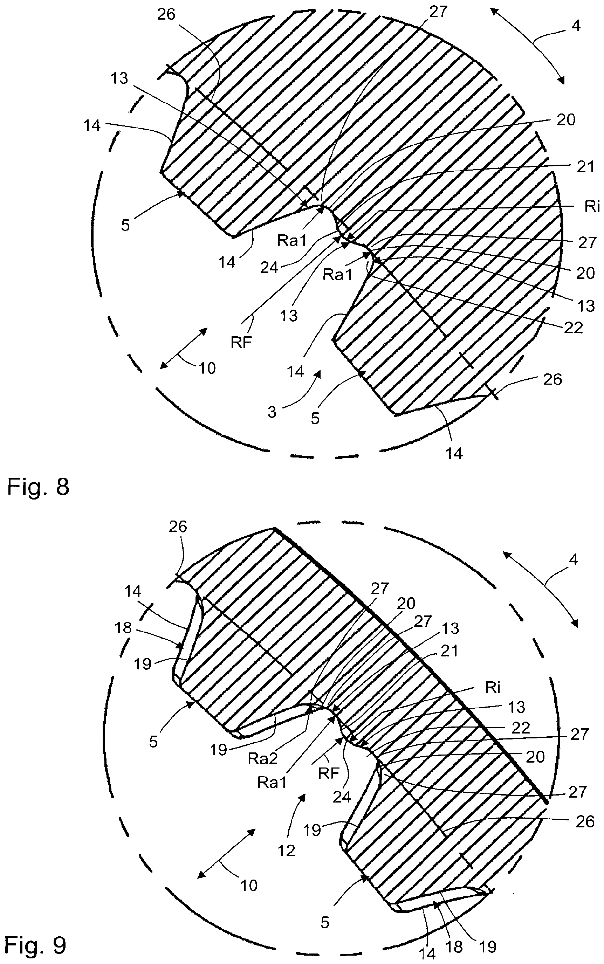

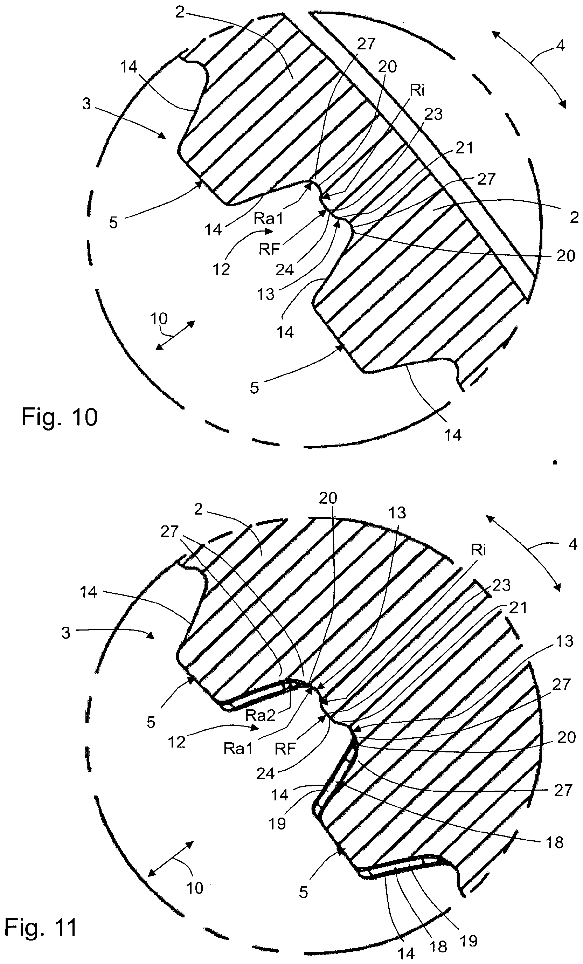

In allen dargestellten Ausführungsformen des Lückenbodens 13 weisen dessen äußere Bodenabschnitte 20 mindestens eine Bogenform auf. Diese Bogenform enthält in Fig. 5 einen Kreisbogen mit dem Bogenradius Ra1. Dabei schließt dieser Kreisbogen in Fig. 5 tangential an die Seitenflanke 14 außerhalb einer Hinterlegungs-Fläche 19 an. Alternativ oder zusätzlich kann der äußere Bodenabschnitt 20 auch tangential an eine Hinterlegungs-Fläche 19 einer Hinterlegung 18 anschließen. Dies wird noch anhand von Fig. 9 und Fig. 11 näher erläutert.

In Fig. 5 ist außerdem erkennbar, dass der äußere Bodenabschnitt 20 entlang der Radialrichtung 10 nach Art einer Ausnehmung 22 des Lückenbodens 12 ausgebildet ist. Der äußere Bodenabschnitt 20 erstreckt sich deshalb radial weiter nach außen als der innere Bodenabschnitt 21. Der innere Bodenabschnitt 21 weist ebenfalls eine Bogenform auf. Diese Bogenform enthält einen Kreisbogen mit dem Bogenradius Ri.

Die Ausgestaltung des Lückenbodens 13 in Fig. 6 unterscheidet sich von der Ausführungsform gemäß Fig. 5 im Wesentlichen durch eine andere Querschnittsform des inneren Bodenabschnittes 21. In Fig. 6 weist der innere Bodenabschnitt 13 zwei Kreisbögen mit dem Bogenradius Ri und dazwischen einen Verbindungsabschnitt 23 auf. Mit seinem mittleren Verbindungsabschnitt 23 liegt der innere Bodenabschnitt 21 auf einem Fußkreis 24 der Komponente 1. Dieser Fußkreis 24 ist konzentrisch zur Mittellängsachse 25 der Komponente 1 angeordnet und weist einen Radius RF auf.

In Fig. 5 liegt die radial innerste Stelle des inneren Bodenabschnittes 21 auf einem Kreisumfang, der als Fußkreis 24 mit dem Radius RF bezeichnet werden kann.

Die Ausgestaltung des Lückenbodens 13 in Fig. 7 unterscheidet sich von der Ausführungsform gemäß Fig. 5 und Fig. 6 im Wesentlichen durch eine andere Querschnittsform des inneren Bodenabschnittes 21. In Fig. 7 sind die beiden äußeren Bodenabschnitte 20 zwar wiederum als Kreisbögen mit dem Bogenradius Ra1 ausgebildet. Der innere Bodenabschnitt 21 ist aber teilweise (bei geradem Verlauf) oder im Wesentlichen vollständig (bei gebogenem Verlauf) auf dem Fußkreis 24 der Komponente 1 angeordnet mit einem derartigen Verlauf, dass die äußeren Bodenabschnitte 20 im Gegensatz zu Fig. 5 und Fig. 6 keine radiale Ausnehmung 22 begrenzen.

In allen dargestellten Ausführungsformen ist der Lückenboden 12 zwischen zwei benachbarten Zähnen 5 in Umfangsrichtung 4 spiegelsymmetrisch ausgebildet bezüglich einer in Radialrichtung 10 angeordneten Symmetrieachse bzw. einer die Mittellängsachse 25 enthaltenden Symmetrieebene. Dabei sind insbesondere die beiden äußeren Bodenabschnitte 20 in derselben Radialebene spiegelsymmetrisch zueinander angeordnet. In einer bevorzugten Ausführungsform der Komponente 1 sind sämtliche Lückenböden 13 der Verzahnung 3 in der vorbeschriebenen Weise spiegelsymmetrisch ausgestaltet. In weiteren Ausführungsformen können einzelne Lückenböden 13 der Verzahnung 3 spiegelsymmetrisch ausgestaltet sein, während andere Lückenböden 13 derselben Verzahnung 3 unsymmetrisch sind bezüglich einer in Radialrichtung 10 angeordneten Symmetrieachse bzw. einer die Mittellängsachse 25 enthaltenden Symmetrieebene.

Die erläuterten unterschiedlichen Ausführungsformen des Lückenbodens 13 sind unabhängig von einer bestimmten Geometrie benachbarter Zähne 5 realisierbar. Mit anderen Worten kann eine spezifische Geometrie des Lückenbodens 13 mit unterschiedlichen Geometrien von Zähnen 5 kombiniert werden.

Die in Fig. 8 erkennbare Querschnittsform des Lückenbodens 13 entspricht prinzipiell der Variante gemäß Fig. 5. Die äußeren Bodenabschnitte 20 sind dabei tangential zu der zugeordneten Zahnflanke 14 des Zahnes 5 angeordnet. Außerdem sind die beiden äußeren Bodenabschnitte 20 tangential zu einem Kreisumfang 26 angeordnet, welcher konzentrisch zur Mittellängsachse 25 der Komponente 1 angeordnet ist und einen größeren Durchmesser hat als der Fußkreis 24.

Fig. 9 zeigt dieselbe Zahnlücke 12 wie Fig. 8, jedoch an einer axial anderen Stelle. Der in Fig. 9 dargestellte Querschnitt des Lückenbodens 13 befindet sich entlang der Axialrichtung 6 betrachtet im Bereich einer Hinterlegungs-Fläche 19 der Hinterlegung 18 gemäß Fig. 3. Hier weist der äußere Bodenabschnitt 20 zwei in Umfangsrichtung 4 aneinandergereihte Kreisbögen auf, nämlich einen ersten Kreisbogen mit dem Radius Ra1 und einen zweiten Kreisbogen mit dem Radius Ra2. Der bereits oben beschriebene Kreisbogen mit dem Radius Ra1 ist im Bereich der Hinterlegung 18 über den Kreisbogen Ra2 mit der Hinterlegungs-Fläche 19 der Hinterlegung 18 verbunden. Dabei ist der äußere Bodenabschnitt 20 tangential zu der Hinterlegung 18 an der Zahnflanke 14 angeordnet, indem der zweite Kreisbogen Ra2 tangential zu der Hinterlegungs-Fläche 19 angeordnet ist.

Die Zahnlücke 12 und deren Lückenboden 13 gemäß Fig. 10 und Fig. 11 ist zwischen zwei benachbarten Zähnen 5 gemäß Fig. 4 angeordnet. Die Querschnittsform des Lückenbodens 13 entspricht prinzipiell der Variante gemäß Fig. 6. Die äußeren Bodenabschnitte 20 sind dabei wiederum tangential zu der zugeordneten Zahnflanke 14 des Zahnes 5 angeordnet. Außerdem sind die beiden äußeren Bodenabschnitte 20 tangential zu dem Kreisumfang 26 gemäß Fig. 8 und Fig. 9 angeordnet (in Fig. 10 und Fig. 11 nicht dargestellt), welcher konzentrisch zur Mittellängsachse 25 der Komponente 1 angeordnet ist und einen größeren Durchmesser hat als der Fußkreis 24. Der Verbindungsabschnitt 23 des inneren Bodenabschnittes 21 ist im Wesentlichen auf dem Fußkreis 24 angeordnet.

Fig. 11 zeigt dieselbe Zahnlücke 12 wie Fig. 10, jedoch befindet sich der in Fig. 11 dargestellte Querschnitt des Lückenbodens 13 entlang der Axialrichtung 6 betrachtet im Bereich der Hinterlegungs-Fläche 19 der Hinterlegung 18 gemäß Fig. 4. Hier weist der äußere Bodenabschnitt 20 analog zu Fig. 9 zwei Kreisbögen auf, nämlich einen ersten Kreisbogen mit dem Radius Ra1 und einen zweiten Kreisbogen mit dem Radius Ra2. Der bereits oben beschriebene Kreisbogen mit dem Radius Ra1 ist im Bereich der Hinterlegung 18 über den Kreisbogen Ra2 mit der Hinterlegungs-Fläche 19 der Hinterlegung 18 verbunden. Dabei ist der äußere Bodenabschnitt 20 tangential zu der Hinterlegung 18 an der Zahnflanke 14 angeordnet, indem der zweite Kreisbogen Ra2 tangential zu der Hinterlegungs-Fläche 19 angeordnet ist.

Wie anhand der Fig. 8 bis Fig. 11 erläutert, weist der äußere Bodenabschnitt 20 derselben Zahnlücke 12 bzw. desselben Lückenbodens 13 entlang der Axialrichtung 6 unterschiedliche Querschnittsformen auf. Mindestens zwei unterschiedliche Querschnittsformen sind gebildet durch eine Querschnittsform im Bereich der Hinterlegung 18 an der Zahnflanke 14 des Zahnes 5 (Fig. 9; Fig. 11) und eine weitere Querschnittsform im Bereich der Zahnflanke 14 axial außerhalb der Hinterlegung 18 (Fig. 8; Fig. 10).

Der Bogenradius Ri des inneren Bodenabschnittes 21 ist vorzugsweise ausgewählt aus einem Bereich von 0,1 mm bis 15,0 mm. Der Bogenradius Ra1 des ersten Kreisbogens des äußeren Bodenabschnittes 20 ist vorzugsweise ausgewählt aus einem Bereich von 0,1 mm bis 2,0 mm. Der Bogenradius Ra2 des zweiten Kreisbogens des äußeren Bodenabschnittes 20 ist vorzugsweise ausgewählt aus einem Bereich von 0,1 mm bis 4,0 mm. Der Radius des Fußkreises RF beträgt vorzugsweise höchstens 75,0 mm.

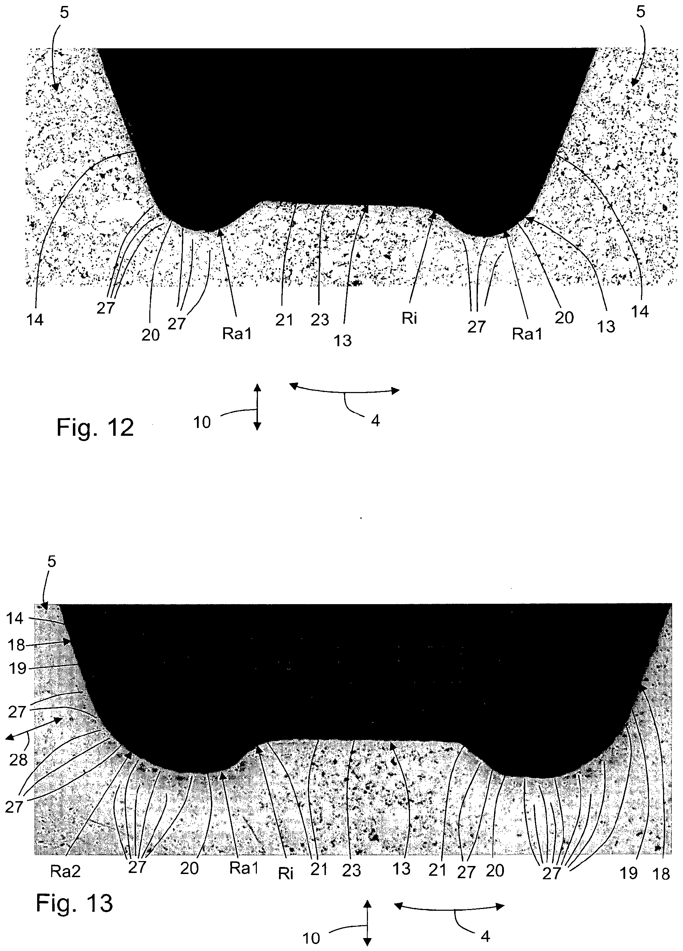

Unabhängig von einer spezifischen Ausgestaltung und Querschnittsform des Lückenbodens 13, der Zähne 5 sowie deren Zahnflanken 14 und der Hinterlegungen 18 ist entlang der Umfangsrichtung 4 betrachtet zumindest ein Abschnitt des Lückenbodens 13 Bestandteil eines Verdichtungsbereiches 27 der Komponente 1. Beispiele für diesen Verdichtungsbereich 27 sind anhand der lichtmikroskopischen Aufnahmen gemäß Fig. 12 und Fig. 13 erkennbar. Der Verdichtungsbereich 27 unterscheidet sich von den übrigen Bereichen der Komponente 1 sowohl in Radialrichtung 10 als auch in Umfangsrichtung 4 durch eine deutlich geringere Porosität und folglich durch eine lokal höhere Materialdichte. Die lokal verdichtete Randschicht im Verdichtungsbereich 27 weist eine lokal höhere Materialdichte auf im Vergleich zu der mittleren Dichte der gesamten Komponente 1 und ebenso im Vergleich zu anderen Bereichen in Umfangsrichtung 4 (z.B. zumindest teilweise die inneren Bodenabschnitte 21 gemäß Fig. 12 und Fig. 13 und die Zahnflanken 14 axial außerhalb der Hinterlegungen 18 gemäß Fig. 12).

In dem Beispiel der Komponente 1 gemäß Fig. 12 und Fig. 13 betrug die mittlere Dichte der gesamten Komponente 1 etwa 7,0 g/cm³, während die Dichte des Verdichtungsbereiches 27 mindestens 7,4 g/cm³ betrug. Der Verdichtungsbereich 27 bildet folglich eine lokal verdichtete Randschicht an der Verzahnung 3 der Komponente 1 mit einer höheren Dichte als die mittlere Dichte der gesamten Komponente 1. Ebenso ist die Dichte der lokal verdichteten Randschicht höher als die Dichte von anderen Randbereichen der Verzahnung 3, welche in Umfangsrichtung 4 außerhalb des Verdichtungsbereiches 27 angeordnet sind. Dort (z.B. zumindest teilweise die inneren Bodenabschnitte 21 gemäß Fig. 12 und Fig. 13 und die Zahnflanken 14 axial außerhalb der Hinterlegungen 18 gemäß Fig. 12) ist die Dichte vorzugsweise in etwa so groß wie die Dichte der gesamten Komponente.

Zur Herstellung der porösen Komponente 1, insbesondere einer Schaltmuffe, wurde eine definierte Metallpulver-Mischung zu einem Grünling gepresst. Dabei war bei einem Herstellungsverfahren das Presswerkzeug derart ausgebildet, dass während des Pressens auch die grundsätzliche Querschnittsform des Lückenbodens 13 geformt wurde. Nach dem Sintern des Grünlings wurde die endgültige Dimensionierung und Form des Lückenbodens 13 sowie die lokale Verdichtung des Verdichtungsbereiches 27 erzielt, indem die Verzahnung 3 mittels Kalibrierpressen und/oder Formen in Radialrichtung 10 beaufschlagt wurde.

Bei einem anderen Herstellungsverfahren wurde die Querschnittsform des Lückenbodens 13 nicht während des Pressens des Grünlings geformt. Vielmehr wurde der Lückenboden 13 nach dem Pressen des Grünlings geformt. Nach dem Sintern des Grünlings wurde die endgültige Dimensionierung und Form des Lückenbodens 13 sowie die Verdichtung des Verdichtungsbereiches 27 erzielt, indem die Verzahnung 3 mittels Kalibrierpressen und/oder Formens in Radialrichtung 10 beaufschlagt wurde.

Das Ergebnis einer lokalen Verdichtung, d.h. einer lokalen Oberflächenverdichtung im Verdichtungsbereich 27 der porösen Komponente 1 ist anhand der Querschliffe gemäß Fig. 12 und Fig. 13 erkennbar. Die lokale Verdichtung bewirkt entlang der Umfangsrichtung 4 abschnittsweise lokal verdichtete Verdichtungsbereiche 27.

Der in Fig. 12 dargestellte radiale Querschnitt des Lückenbodens 13 und der angrenzenden Zahnflanken 14 entspricht der Schnittlinie X-X in Fig. 4, d.h. es handelt sich um einen radialen Querschnitt axial außerhalb der Hinterlegung 18 ähnlich der Variante gemäß Fig. 10. Entlang der Umfangsrichtung 4 ist deutlich erkennbar, dass das Material zumindest im Bereich der gekrümmt oder gebogen verlaufenden äußeren Bodenabschnitte 20 eine deutlich geringere Porosität und folglich eine höhere Materialdichte aufweist als in den übrigen Bereichen. Die höhere Materialdichte erstreckt sich entlang der Radialrichtung 10 betrachtet zumindest in den oberflächennahen Materialschichten der äußeren Bodenabschnitte 20 und nimmt mit zunehmender radialer Materialtiefe wieder ab bis zu einer Annäherung oder Angleichung an die mittlere Dichte der gesamten Komponente 1. Ebenso ist in Fig. 12 erkennbar, dass die höhere Materialdichte entlang der Umfangsrichtung 4 der Verzahnung 3 beim Übergang der äußeren Bodenabschnitte 20 zum inneren Bodenabschnitt 21 und zu den Zahnflanken 14 wieder abnimmt bis zu einer Annäherung oder Angleichung an die mittlere Dichte der gesamten Komponente 1.

Das Ergebnis der lokalen Verdichtung an derselben porösen Komponente 1 im Bereich einer Hinterlegung 18 an der Zahnflanke 14 ist anhand des Querschliffes gemäß Fig. 13 erkennbar. Der hier dargestellte radiale Querschnitt des Lückenbodens 13 und der angrenzenden Zahnflanken 14 mit den Hinterlegungen 18 entspricht der Schnittlinie XI-XI in Fig. 4, d.h. es handelt sich um einen radialen Querschnitt axial im Bereich der Hinterlegung 18 ähnlich der Variante gemäß Fig. 11. Entlang der Umfangsrichtung 4 ist deutlich erkennbar, dass das Material zumindest im Bereich der gekrümmt oder gebogen verlaufenden äußeren Bodenabschnitte 20 sowie der angrenzenden Abschnitte der Hinterlegungs-Flächen 19 eine deutlich geringere Porosität und folglich eine höhere Materialdichte aufweist als in den übrigen Bereichen bzw. Abschnitten 21, 23. Die höhere Materialdichte erstreckt sich entlang der Radialrichtung 10 betrachtet zumindest in den oberflächennahen Materialschichten der äußeren Bodenabschnitte 20 und nimmt mit zunehmender radialer Materialtiefe wieder ab bis zu einer Annäherung oder Angleichung an die mittlere Dichte der gesamten Komponente 1. Außerdem erstreckt sich die höhere Materialdichte entlang einer Richtung 28 orthogonal zur Hinterlegungs-Fläche 19 betrachtet zumindest in den oberflächennahen Materialschichten der Hinterlegung 18 und nimmt mit zunehmender Materialtiefe in Richtung 28 wieder ab. Ebenso ist in Fig. 13 erkennbar, dass die höhere Materialdichte entlang der Umfangsrichtung 4 der Verzahnung 3 beim Übergang der äußeren Bodenabschnitte 20 zum inneren Bodenabschnitt 21 wieder abnimmt bis zu einer Annäherung oder Angleichung an die mittlere Dichte der gesamten Komponente 1.

Der Vollständigkeit halber sei darauf hingewiesen, dass die in den Zeichnungen dargestellten Details nicht notwendigerweise maßstäblich sind und zum leichteren Verständnis einzelner Merkmale der Komponente teilweise vergrößert oder verkleinert dargestellt sind.

**Bezugszeichenliste**

| | | | |
|---|---|---|---|
| 1 | Komponente | 21 | innerer Bodenabschnitt |
| 2 | Körper | 22 | Ausnehmung |
| 3 | Verzahnung | 23 | Verbindungsabschnitt |
| 4 | Umfangsrichtung | 24 | Fußkreis |
| 5 | Zahn | 25 | Mittellängsachse |
| 6 | Axialrichtung | 26 | Kreisumfang |
| 7 | Stirnseite | 27 | Verdichtungsbereich |
| 8 | Außenumfang | 28 | Richtung |
| 9 | Ringnut | | |
| 10 | Radialrichtung | Ra1 | erster Kreisbogenradius |
| 11 | Innenumfang | | des äußeren |
| 12 | Zahnlücke | | Bodenabschnittes |
| 13 | Lückenboden | Ra2 | zweiter Kreisbogenradius |
| 14 | Zahnflanke | | des äußeren |
| 15 | Zahnkopf | | Bodenabschnittes |
| 16 | Dachschräge | RF | Radius des Fußkreises |
| 17 | Zahnspitze | Ri | Kreisbogenradius des |
| 18 | Hinterlegung | | inneren Bodenabschnittes |
| 19 | Hinterlegungs-Fläche | | |
| 20 | äußerer Bodenabschnitt | | |

## Patentansprüche

1. Pulvermetallurgisch hergestellte Komponente (1), mit einem Körper (2) und einer eine Vielzahl von Zähnen (5) aufweisenden Verzahnung (3), wobei
- zwischen zwei in Umfangsrichtung (4) einander zugewandten Zahnflanken (14, 18) zweier benachbarter Zähne (5) eine Zahnlücke (12) mit einem Lückenboden (13, 20, 21) ausgebildet ist,
- der Lückenboden (13, 20, 21) die beiden einander zugewandten Zahnflanken (14, 18) miteinander verbindet, und
- die Verzahnung (3) entlang der Umfangsrichtung (4) einen Verdichtungsbereich (27) aufweist, welcher eine höhere Dichte im Vergleich zur Dichte der gesamten Komponente (1) aufweist,
**dadurch gekennzeichnet, dass**
- an einer Zahnflanke (14) eine Funktionsausnehmung (18, 19) angeordnet ist, und
- die Funktionsausnehmung (18, 19) und ein in Umfangsrichtung (4) benachbart angeordneter äußerer Bodenabschnitt (20) des Lückenbodens (13) zumindest teilweise Bestandteil des Verdichtungsbereiches (27) sind derart, dass der Verdichtungsbereich (27) eine höhere Dichte aufweist im Vergleich zur Dichte eines in Umfangsrichtung (4) relativ zum äußeren Bodenabschnitt (20) benachbarten Bodenabschnittes (21) des Lückenbodens (13).

2. Komponente nach Anspruch 1,
**dadurch gekennzeichnet, dass**
der Lückenboden (13) in Umfangsrichtung (4)
- zwei äußere Bodenabschnitte (20) aufweist, welche jeweils einer Zahnflanke (14) zugewandt sind, und
- zwischen den beiden äußeren Bodenabschnitten (20) einen inneren Bodenabschnitt (21) aufweist.

3. Komponente nach einem der vorhergehenden Ansprüche,
**dadurch gekennzeichnet, dass**
der in einer radialen Querschnittsebene verlaufende Querschnitt des Lückenbodens (13) zumindest im Bereich eines oder des äußeren Bodenabschnittes (20) eine Bogenform (Ra1, Ra2) aufweist.

4. Komponente nach Anspruch 3,
**dadurch gekennzeichnet, dass**
die Bogenform einen Kreisbogen (Ra1, Ra2) aufweist.

5. Komponente nach einem der vorhergehenden Ansprüche,
**dadurch gekennzeichnet, dass**
ein äußerer oder der äußere Bodenabschnitt (20) nach Art einer Ausnehmung (22) des Lückenbodens (13) ausgebildet ist.

6. Komponente nach einem der vorhergehenden Ansprüche,
**dadurch gekennzeichnet, dass**
ein äußerer oder der äußere Bodenabschnitt (20) und eine Zahnflanke (14) des Zahnes (5) tangential zueinander angeordnet sind.

7. Komponente nach einem der vorhergehenden Ansprüche,
**dadurch gekennzeichnet, dass**
ein äußerer oder der äußere Bodenabschnitt (20) und eine Funktionsausnehmung (18, 19) an einer Zahnflanke (14) des Zahnes (5) tangential zueinander angeordnet sind.

8. Komponente nach einem der vorhergehenden Ansprüche,
**dadurch gekennzeichnet, dass**
ein äußerer oder der äußere Bodenabschnitt (20) tangential zu einem Kreisumfang (26) angeordnet ist, welcher konzentrisch zu einer Mittellängsachse (25) der Komponente (1) angeordnet ist.

9. Komponente nach einem der vorhergehenden Ansprüche,
**dadurch gekennzeichnet, dass**
der Lückenboden (13) zwischen zwei benachbarten Zähnen (5) in Umfangsrichtung (4) spiegelsymmetrisch ausgebildet ist bezüglich einer in Radialrichtung (10) angeordneten Symmetrieachse.

10. Komponente nach einem der vorhergehenden Ansprüche,
**dadurch gekennzeichnet, dass**
ein äußerer oder der äußere Bodenabschnitt (20) entlang der Axialrichtung (6) unterschiedliche radiale Querschnittsformen aufweist.

11. Komponente nach Anspruch 10,
**dadurch gekennzeichnet, dass**
zwei unterschiedliche radiale Querschnittsformen gebildet sind durch
- eine Querschnittsform im Bereich einer Funktionsausnehmung (18, 19) an der Zahnflanke (14) des Zahnes (5), und
- eine Querschnittsform im Bereich der Zahnflanke (14) axial außerhalb der Funktionsausnehmung (18, 19).

12. Komponente nach einem der vorhergehenden Ansprüche,
**dadurch gekennzeichnet, dass**
ein innerer oder der innere Bodenabschnitt (21) des Lückenbodens (13) zumindest teilweise auf einem Fußkreis (RF) angeordnet ist, welcher konzentrisch zu einer Mittellängsachse (25) der Komponente (1) angeordnet ist.

13. Komponente nach einem der vorhergehenden Ansprüche,
**dadurch gekennzeichnet, dass**
die Funktionsausnehmung als eine Hinterlegung (18, 19) ausgebildet ist,

14. Komponente nach einem der vorhergehenden Ansprüche,
**dadurch gekennzeichnet, dass**
sie eine Innenverzahnung (3) mit einer Vielzahl von Zähnen (5) aufweist.

15. Komponente nach Anspruch 14,
**dadurch gekennzeichnet, dass**
sie als eine Schaltmuffe (1) mit einer Vielzahl von Zähnen (5) aufweisenden Innenverzahnung (3) ausgebildet ist

## Claims

1. Component (1) produced by powder metallurgy, having a body (2) and a toothing (3) comprising a multiplicity of teeth (5), wherein
- a tooth space (12) with a space bottom (13, 20, 21) is formed between two tooth flanks (14, 18), which face one another in a circumferential direction (4), of two adjacent teeth (5),
- the space bottom (13, 20, 21) connects the two mutually facing tooth flanks (14, 18) to one another, and
- the toothing (3) comprises, along the circumferential direction (4), a densification region (27) which has a higher density in comparison with the density of the overall component (1),
**characterized in that**
- a functional cutout (18, 19) is arranged on a tooth flank (14), and
- the functional cutout (18, 19) and an outer bottom portion (20), which is arranged adjacently in the circumferential direction (4), of the space bottom (13) are at least partially part of the densification region (27) such that the densification region (27) has a higher density in comparison to the density of a bottom portion (21), which is adjacent relative to the outer bottom portion (20) in the circumferential direction (4), of the space bottom (13).

2. Component according to Claim 1,
**characterized in that**
the space bottom (13) comprises, in the circumferential direction (4),
- two outer bottom portions (20) which each face a tooth flank (14), and
- an inner bottom portion (21) between the two outer bottom portions (20).

3. Component according to one of the preceding claims, **characterized in that**
the cross section, which runs in a radial cross-sectional plane, of the space bottom (13) has, at least in the region of a or the outer bottom portion (20), an arcuate shape (Ra1, Ra2).

4. Component according to Claim 3,
**characterized in that**
the arcuate shape comprises a circular arc (Ra1, Ra2) .

5. Component according to one of the preceding claims, **characterized in that**
an outer or the outer bottom portion (20) is formed in the manner of a cutout (22) of the space bottom (13) .

6. Component according to one of the preceding claims, **characterized in that**
an outer or the outer bottom portion (20) and a tooth flank (14) of the tooth (5) are arranged tangentially with respect to one another.

7. Component according to one of the preceding claims, **characterized in that**
an outer or the outer bottom portion (20) and a functional cutout (18, 19) on a tooth flank (14) of the tooth (5) are arranged tangentially with respect to one another.

8. Component according to one of the preceding claims, **characterized in that**
an outer or the outer bottom portion (20) is arranged tangentially with respect to a circular circumference (26) which is arranged concentrically with respect to a central longitudinal axis (25) of the component (1).

9. Component according to one of the preceding claims, **characterized in that**
the space bottom (13) between two adjacent teeth (5) in the circumferential direction (4) is formed in a mirror-symmetrical manner in relation to an axis of symmetry arranged in a radial direction (10).

10. Component according to one of the preceding claims, **characterized in that**
an outer or the outer bottom portion (20) has different radial cross-sectional shapes along the axial direction (6).

11. Component according to claim 10,
**characterized in that**
two different radial cross-sectional shapes are formed by
- a cross-sectional shape in the region of a functional cutout (18, 19) on the tooth flank (14) of the tooth (5), and
- a cross-sectional shape in the region of the tooth flank (14) axially outside the functional cutout (18, 19).

12. Component according to one of the preceding claims, **characterized in that**
an inner or the inner bottom portion (21) of the space bottom (13) is at least partially arranged on a root circle (RF) which is arranged concentrically with respect to a central longitudinal axis (25) of the component (1).

13. Component according to one of the preceding claims, **characterized in that**
the functional cutout is in the form of a back taper (18, 19).

14. Component according to one of the preceding claims, **characterized in that**
it comprises an inner toothing (3) comprising a multiplicity of teeth (5).

15. Component according to Claim 14,
**characterized in that**
it is in the form of a shift sleeve (1) comprising an inner toothing (3) comprising a multiplicity of teeth (5).

## Revendications

1. Composant (1) fabriqué par métallurgie des poudres, comprenant un corps (2) et une denture (3) présentant une pluralité de dents (5),
- entre deux flancs de dents (14, 18) de deux dents (5) voisines, tournés l'un vers l'autre dans la direction périphérique (4), étant formé un entredent (12) avec un fond d'entredent (13, 20, 21),
- le fond d'entredent (13, 20, 21) reliant entre eux les deux flancs de dent (14, 18) tournés l'un vers l'autre, et
- la denture (3) présentant le long de la direction périphérique (4) une zone de compactage (27) qui présente une densité plus élevée en comparaison de la densité de l'ensemble du composant (1),
**caractérisé en ce que**
- un évidement fonctionnel (18, 19) est agencé sur un flanc de dent (14), et
- l'évidement fonctionnel (18, 19) et une section de fond extérieure (20) du fond d'entredent (13), agencée au voisinage dans la direction périphérique (4), font au moins partiellement partie de la zone de compactage (27), de telle sorte que la zone de compactage (27) présente une densité plus élevée en comparaison de la densité d'une section de fond (21) du fond d'entredent (13), voisine dans la direction périphérique (4) par rapport à la section de fond extérieure (20).

2. Composant selon la revendication 1, **caractérisé en ce que** le fond d'entredent (13) présente, dans la direction périphérique (4) :
- deux sections de fond extérieures (20), qui sont chacune tournées vers un flanc de dent (14), et
- une section de fond intérieure (21) entre les deux sections de fond extérieures (20).

3. Composant selon l'une quelconque des revendications précédentes, **caractérisé en ce que** la section transversale du fond d'entredent (13), qui s'étend dans un plan de section transversale radial, présente une forme arquée (Ra1, Ra2) au moins dans la zone d'une ou de la section de fond extérieure (20).

4. Composant selon la revendication 3, **caractérisé en ce que** la forme d'arc présente un arc de cercle (Ra1, Ra2) .

5. Composant selon l'une quelconque des revendications précédentes, **caractérisé en ce qu'**une section de fond extérieure ou la section de fond extérieure (20) est configurée à la manière d'un évidement (22) du fond d'entredent (13).

6. Composant selon l'une quelconque des revendications précédentes, **caractérisé en ce qu'**une section de fond extérieure ou la section de fond extérieure (20) et un flanc de dent (14) de la dent (5) sont agencés tangentiellement l'un à l'autre.

7. Composant selon l'une quelconque des revendications précédentes, **caractérisé en ce qu'**une section de fond extérieure ou la section de fond extérieure (20) et un évidement fonctionnel (18, 19) sur un flanc de dent (14) de la dent (5) sont agencés tangentiellement l'un à l'autre.

8. Composant selon l'une quelconque des revendications précédentes, **caractérisé en ce qu'**une section de fond extérieure ou la section de fond extérieure (20) est agencée tangentiellement à une périphérie d'un cercle (26) qui est concentrique à un axe longitudinal central (25) du composant (1).

9. Composant selon l'une quelconque des revendications précédentes, **caractérisé en ce que** le fond d'entredent (13) entre deux dents voisines (5) est configuré avec une symétrie spéculaire dans la direction périphérique (4) par rapport à un axe de symétrie agencé dans la direction radiale (10).

10. Composant selon l'une quelconque des revendications précédentes, **caractérisé en ce qu'**une section de fond extérieure ou la section de fond extérieure (20) présentent des formes de section transversale radiale différentes le long de la direction axiale (6).

11. Composant selon la revendication 10, **caractérisé en ce que** deux formes de section transversale radiale différentes sont formées par
- une forme de section transversale dans la zone d'un évidement fonctionnel (18, 19) sur le flanc de dent (14) de la dent (5), et
- une forme de section transversale dans la zone du flanc de dent (14) axialement à l'extérieur de l'évidement fonctionnel (18, 19).

12. Composant selon l'une quelconque des revendications précédentes, **caractérisé en ce qu'**une section de fond intérieure ou la section de fond intérieure (21) du fond d'entredent (13) est agencée au moins partiellement sur un cercle de pied (RF) qui est agencé concentriquement à un axe longitudinal central (25) du composant (1).

13. Composant selon l'une quelconque des revendications précédentes, **caractérisé en ce que** l'évidement fonctionnel est configuré sous la forme d'une contre-dépouille (18, 19).

14. Composant selon l'une quelconque des revendications précédentes, **caractérisé en ce qu'**il présente une denture intérieure (3) avec une pluralité de dents (5).

15. Composant selon la revendication 14, **caractérisé en ce qu'**il est configuré sous la forme d'un manchon de commande (1) avec une denture intérieure (3) présentant une pluralité de dents (5).
